# EUROPÄISCHE PATENTSCHRIFT

(11) **EP 1 273 082 B1**
(45) Veröffentlichungstag und Bekanntmachung des Hinweises auf die Patenterteilung: **28.07.2004**
(21) Anmeldenummer: 01929475.0
(22) Anmeldetag: 29.03.2001
(51) Int. Cl.: H02G 3/38

(54) **MULTIFUNKTIONSBODEN**
MULTIFUNCTIONAL FLOOR
SOL MULTIFONCTION

(30) Priorität: 31.03.2000 DE 10016084
(43) Veröffentlichungstag der Anmeldung: 08.01.2003
(73) Patentinhaber: Armstrong DLW AG, 74321 Bietigheim-Bissingen (DE); EMT Werkzeug- und Formenbau GMBH, 74523 Schwäbisch Hall (DE)
(72) Erfinder: KITZINGER, Artur, 71732 Tamm (DE); MAUK, Hanns, Jörg, 74395 Mundelsheim (DE); BAY, Thomas, 74523 Schwäbisch Hall (DE); RÜCK, Matthias, 74423 Obersontheim (DE); MENNEKES, Rolf, 74523 Schwäbisch Hall (DE)
(74) Vertreter: Müller-Boré & Partner Patentanwälte
(86) Internationale Anmeldenummer: PCT/EP2001/003613
(87) Internationale Veröffentlichungsnummer: WO 2001/073909

(56) Entgegenhaltungen:
- FR-A- 1 317 157
- US-A- 4 773 196
- US-A- 4 858 401

## Beschreibung

Die Erfindung betrifft einen Bauelementesatz für die Erstellung eines Bodenbelags, insbesondere eines Multifunktionsbodens, wie er in Anspruch 1 beschrieben ist, sowie ein Funktionsverbindungselement hierfür, wie es in Anspruch 10 beschrieben ist.

DE 297 03 123 U1 beschreibt einen Bodenbelag, insbesondere für Hallen, der aus einer Vielzahl im wechselseitigen Verbund dicht bei dicht verlegbarer und entlang ihrer Ränder miteinander verbindbarer Belagbahnen oder Belagplatten besteht, wobei die Belagbahnen oder Belagplatten mehrteilig gestaltet sind und aus einem mit einer Vielzahl von Ausnehmungen versehenen Rahmenteil und einer Vielzahl zur Grundrißform der Ausnehmungen im Rahmenteil deckungsgleich gestalteten Einsatzteilen besteht, wobei Rahmenteil und Einsatzteile mindestens bereichsweise unterschiedliche Höhen aufweisen und lösbar miteinander verbindbar sind. Es wird ferner vorgeschlagen, die Einsatzteile mit optisch oder elektronisch lesbaren Signalmarken bzw. Signalgebern auszustatten, um auf diese Weise eine Wegemarkierung oder Leitlinie für mannlos selbstfahrende Fahrzeuge zu bilden. Jedoch weist ein solcher Bodenbelag hinsichtlich seiner Bodeneigenschaften gravierende Nachteile auf, insbesondere hinsichtlich der mechanischen Belastbarkeit, Verlegefunktionalität, Staub-, Schmutz- und Wasserabweiseeigenschaften sowie Haltbarkeit und Reinigungsmöglichkeit. Der dort beschriebene Bodenbelag ist aus diesen Gründen nur begrenzt einsetzbar.

Es ist eine Aufgabe der Erfindung, einen Bodenbelag bzw. einen Bauelementesatz für die Erstellung eines Bodenbelags sowie ein Funktionsverbindungselement hierfür bereitzustellen, welcher hohen mechanischen Anforderungen bei gleichzeitiger einfacher Verlegeweise genügt und vorzugsweise Multifunktionseigenschaften, insbesondere eine elektrische bzw. elektromagnetische Funktionalität aufweisen soll.

Erfindungsgemäß wird diese Aufgabe durch einen Bauelementesatz für die Erstellung eines Bodenbelages mit den in Anspruch 1 angegebenen Merkmalen sowie durch ein Funktionsverbindungselement gemäß Anspruch 10 gelöst. Bevorzugte Ausführungsformen sind Gegenstand der abhängigen Ansprüche.

Gemäß der Erfindung umfaßt ein Bauelementesatz für die Erstellung eines Bodenbelages
- zumindest ein insbesondere plattenförmiges Grundmodul mit einer Grundmodulunterseite und einer Grundmoduloberseite, wobei die Grundmodulunterseite zum Auslegen eines Bodenbelages auf einem vorbereiteten Bodenunterbau (beispielsweise eines Estrichs) ausgelegt ist und an der gegenüberliegenden, der Begehseite des Bodenbelags zugewandten Grundmoduloberseite zumindest eine Modulausnehmung (Grundmodulverbindungselementausnehmung) vorgesehen ist,
- zumindest ein Verbindungselement, welches derart in die Modulausnehmung einsetzbar ist, daß ein Verbindungsabschnitt des Verbindungselements über die Grundmoduloberseite in Richtung der Begehfläche vorspringt, und
- zumindest ein insbesondere plattenförmiges Bodenbelagsoberteil, dessen Oberseite als Teil der Begehfläche ausgelegt ist und an dessen dem Grundmodul und dem Verbindungselement zugewandten Unterseite zumindest eine Belagsoberteilausnehmung (Bodenbelagsoberteilverbindungselementausnehmung) vorgesehen ist, in welche der Verbindungsabschnitt des zugeordneten Verbindungselements eingreift.

Ein solcher erfindungsgemäßer, aus drei Bauelementen bestehender Bauelementesatz für die Erstellung eines Bodenbelages gestattet vorteilhafterweise eine einfache, schnelle und sichere Verlegung eines Bodenbelages, welcher hohen mechanischen Anforderungen genügt. Besonders bevorzugt ist es, unter Verwendung des erfindungsgemäßen Bauelementesatzes den Bodenbelag ohne eine Zuhilfenahme von zusätzlichen Fixiermitteln, wie beispielsweise Klebstoff, zu verlegen. Statt dessen kann durch das erfindungsgemäße Zusammenwirken der Grundmodule mit den Bodenbelagsoberteilen über die Verbindungselemente eine flächenstabile Verlegung erzielt werden, die ohne eine zusätzliche Verklebung hohen mechanischen Belastungen standhält.

Gemäß einer bevorzugten Ausführungsform sind die Modul- und/oder Belagsoberteilausnehmung ausgelegt, das Verbindungselement formschlüssig aufzunehmen, wobei der Bauelementesatz vorzugsweise eine Verrasteinrichtung zum Verrasten der Modul- und/oder Belagsoberteilausnehmung mit dem Verbindungselement umfaßt. Durch eine formschlüssige Ausgestaltung des Verbindungselementes bezüglich zu den Ausnehmungen in dem Grundmodul und/oder dem Bodenbelagsoberteil ist es möglich, bei einfachster Verlegebauweise ohne zusätzliche Fixiermittel eine hohe Flächenstabilität des Bodenbelages zu erzielen. Besonders bevorzugt ist hierbei die Ausgestaltung als "Klemmbausteinboden", bei dem die Verbindungselemente als Rastbausteine bzw. Klemmbausteine in die zugehörigen Ausnehmungen geklemmt bzw. gerastet werden können. Neben einer hohen Flächenstabilität in der Bodenbelagsebene kann hierdurch auch die Stabilität senkrecht zur Bodenbelagsebene, d.h. in der vertikalen Richtung erhöht werden. Derartige Verrasteinrichtungen zwischen dem Grundmodul und dem Bodenbelagsoberteil können auch in getrennt von dem Verbindungselement bereitgestellten Einrichtungen vorgesehen sein, um die mechanischen Bodeneigenschaften weiter zu verbessern. Insbesondere kann vorgesehen sein, das Verbindungselement in Form einer Klemmpassung in die Modul- und/oder Belagsoberteilausnehmung einzupassen.

Gemäß einer weiteren bevorzugten Ausführungsform gelangen Auflageflächen der Grundmoduloberseite, welche an die Modulausnehmung angrenzen, zumindest teilweise bzw. bereichsweise flächig mit zugeordneten Auflageflächen der Unterseite des Bodenbelagsoberteils in Anlage. Vorteilhafterweise kann somit eine Ableitung von senkrecht auf den Bodenbelag einwirkenden Belastungen direkt von dem Bodenbelagsoberteil auf die Grundmodule bereitgestellt werden, ohne die Verbindungselemente im gleichen Maße bei der Belastungsableitung miteinzubeziehen bzw. die Belastungsableitung gleichmäßiger zu verteilen.

Gemäß einer weiteren bevorzugten Ausführungsform umfaßt das Bodenbelagsoberteil eine insbesondere plattenförmige Designschicht, dessen Oberseite als Teil der Begehfläche ausgelegt ist, und eine Basisschicht, die an der Unterseite der Designschicht angebracht ist. Die Designschicht ist vorteilhafterweise ein handelsüblicher PVC-Bodenbelag, der mehrteilig in Form von Platten ausgebildet ist. Die Designschicht kann jedoch ebenfalls durch einen aufrollbaren Bodenbelag gebildet werden.

Vorzugsweise ist die Basisschicht plattenförmig und weist an seiner, der Designschicht abgewandten Unterseite zumindest eine Ausnehmung oder einen Durchbruch zur Bildung der Belagsoberteilausnehmung auf. In Verbindung mit einem herkömmlichen Bodenbelag, der als Designschicht verwendet wird, kann auf diese Weise kostengünstig das erfindungsgemäße Bodenbelagsoberteil des Bauelementsatzes erstellt werden.

Besonders bevorzugt ist die Ausbildung der Basisschicht als ein Gitterbauteil, insbesondere als ein Stanzgitter mit einer Vielzahl von derartigen Durchbrüchen, wobei das Gitterbauteil an der Unterseite der Designschicht befestigt, vorzugsweise angeklebt, ist. Neben der Ausbildung als Stanzgitter ist es ebenfalls möglich, entsprechende vorspringende Strukturen spritzgußtechnisch durch Hinterspritzen der Designschicht zu fertigen.

Gemäß einer weiteren bevorzugten Ausführungsform umfaßt der Bauelementesatz eine Vielzahl der Grundmodule, der Verbindungselemente und der Bodenbelagsoberteile und die Bodenbelagsoberteile, vorzugsweise auch die Grundmodule, sind jeweils ausgelegt, den Bodenbelag in aneinander angrenzender Weise und vorzugsweise denselben lückenlos bildend angeordnet zu werden. Dementsprechend sind die Bodenbelagsoberteile vorteilhafterweise derart ausgestaltet, daß sie dicht an dicht verlegbar sind, ohne daß Zwischenräume bzw. größere Fugen zwischen den Bodenbelagsoberteilen nach einem Erstellen des Bodenbelages zurückbleiben. Vorteilhafterweise sind auch die Grundmodule ausgelegt, den gesamten Bodenunterbau flächendeckend belegen zu können, um so eine Stütz- bzw. Auflagefläche über die gesamte Fläche des Bodenbelages für die Bodenbelagsoberteile bereitstellen zu können.

Vorzugsweise umfassen die Grundmodule zumindest zwei der Modulausnehmungen und die Bodenbelagsoberteile zumindest zwei der Belagsoberteilausnehmungen, wobei jeder Modulausnehmung eine der Belagsoberteilausnehmungen und eines der Verbindungselemente zugeordnet ist.

Besonders bevorzugt ist es, die Grundmodule und die Bodenbelagsoberteile derart auszugestalten, daß jedes der Grundmodule über die zugeordneten Verbindungselemente mit zumindest zwei der Bodenbelagsoberteile verbindbar ist.
Hierdurch ist es möglich, aneinander angrenzende Grundmodule über die Verbindung mit einem Bodenbelagsoberteil mittels der Verbindungselemente weiter zu stabilisieren.

Besonders bevorzugt sind die Grundmodule und die Bodenbelagsoberteile plattenförmig und in ihren Umfängen rechteckig ausgebildet, insbesondere quadratisch, wobei jedes Grundmodul zumindest vier der Modulausnehmungen umfaßt und jedes Grundmodul mit zumindest vier der Bodenbelagsoberteile über die zugeordneten Verbindungselemente verbindbar ist. Somit ist jedes Grundmodul mit vier Bodenbelagsoberteilen verbindbar, wobei vorzugsweise jedes Bodenbelagsoberteil ebenfalls mit vier Grundmodulen verbindbar ist. Hierdurch wird eine weitere Verbesserung der Flächenstabilität eines derartigen Bodenbelags erzielt, da beispielsweise jedes Grundmodul über die Verbindungselemente und die Bodenbelagsoberteile mit benachbarten acht Grundmodulen verbindbar ist.

Gemäß einer weiteren bevorzugten Ausführungsform der Erfindung sind die Grundmodule und die Bodenbelagsoberteile im wesentlichen plattenförmig und in ihren Umfängen rechteckig und sind jeweils zum lückenlosen Bilden des Bodenbelags in matrixartig aneinander angrenzender Weise derart ausgebildet, daß Seitenkanten der Grundmodule jeweils parallel zu Seitenkanten der Bodenbelagsoberteile sind, und Seitenkantenlängen der Grundmodule und der Bodenbelagsoberteile zueinander in einem ganzzahligen Verhältnis stehen. Besonders bevorzugt sind die Seitenkantenlängen der Grundmodule gleich den entsprechenden Seitenkantenlängen der Bodenbelagsoberteile. Eine derartige Ausgestaltung der Grundmodule und der Bodenbelagsoberteile, die eine solche matrixartige Anordnung gestattet, d.h. eine schachbrettartige Anordnung in Reihen und Spalten ist insbesondere aufgrund der einfachen Verlegeweise bevorzugt. Besonders bevorzugt sind die Seitenkantenlängen der plattenförmigen Bodenbelagsoberteile gleich den Seitenlängen der Grundmodule oder stehen in einem ganzzahligen Verhältnis zu diesen. Dies gestattet vorteilhafterweise eine flächendeckende, periodische Auslegung der Bodenbelagsoberteile auf die Grundmodule derart, daß Ecken und Seitenkanten der Bodenbelagsoberteile in vorbestimmten Anlagepositionen der Grundmodule in Anlage treten.

Vorteilhafterweise sind die Bodenbelagsoberteile und die Grundmodule derart ausgelegt, daß jede Plattenecke der Bodenbelagsoberteile in Normalenrichtung der Plattenebene, d.h. senkrecht zu der Verlegeebene des Bodenbelages, über einem Plattenmittelpunkt eines zugeordneten Grundmoduls der Grundmodule angeordnet werden kann. Eine derartige Ausgestaltung der Bodenbelagsoberteile und der Grundmodule gestattet demgemäß eine "überlappende" Verlegung der Bodenbelagsoberteile auf den Grundmodulen, so daß der Berührungspunkt von vier angrenzenden Grundmodulen in Normalenrichtung der Verlegeebene des Bodenbelages senkrecht unter dem Mittelpunkt des entsprechenden Belagsoberteils liegt. Hierdurch sind vorteilhafterweise die besonders problematischen Eindrings- bzw. Durchdringspunkte für Fremdkörper, wie beispielsweise Staub, Schmutz und/oder Flüssigkeit, auf Positionen beschränkt, welche im Bereich von Kreuzungspunkten der Seitenkanten der Bodenbelagsoberteile mit zugeordneten senkrecht dazu verlaufenden Seitenkanten der Grundmodule in der Mitte dieser Seitenkanten auftreten. Die hierdurch verbesserten Bodeneigenschaften gestatten eine Verwendung des erfindungsgemäßen Bodenbelages auch in mechanisch stark beanspruchten Räumen.

Gemäß einer weiteren bevorzugten Ausführungsform umfassen die Grundmodule und die Bodenbelagsoberteile jeweils zumindest eine Dichteinrichtung, welche vorzugsweise an einer Auflagefläche der Grundmoduloberseite und an einer Auflagefläche der Unterseite des Bodenbelagsoberteils angeordnet ist. Durch eine Belastung des erstellten Bodenbelages kann somit die Dichteinrichtung des Bodenbelagsoberteils auf die zugeordnete Dichteinrichtung des Grundmoduls gepreßt werden, so daß eine effektive Dichtwirkung gegenüber Fremdkörpern, wie beispielsweise Schmutz, Staub und/oder Feuchtigkeit bzw. Flüssigkeit gebildet wird.

Vorzugsweise umfaßt die Dichteinrichtung eine formschlüssige Keildichtung, welche insbesondere selbsthemmend ausgeführt sein kann. Hierzu kann in der Auflagefläche in der Oberseite des Grundmoduls eine keilförmige umlaufende Ausnehmung eingebracht sein, in welche formschlüssig ein zugeordneter Vorsprung an der Unterseite des Bodenbelagsoberteils dichtend eingreift. Wenn das Grundmodul als ein Spritzgußteil erstellt wird, ist eine solche Ausnehmung (bzw. ein entsprechender Vorsprung) in einfacher Weise herstellbar.

Gemäß einer weiteren bevorzugten Ausführungsform umfassen die plattenförmigen Bodenbelagsoberteile entlang ihren umfänglichen Seitenflächen Dichteinrichtungen, welche ausgelegt sind, Fugen zwischen zwei zugeordneten, aneinander angrenzenden Bodenbelagsoberteilen der Bodenbelagsoberteile eines erstellten Bodenbelags zu dichten. Eine Anordnung von Dichteinrichtungen an Seitenflächen der plattenförmigen Bodenbelagsoberteile ist vorteilhaft, da auf diese Weise eine effektive Dichtung gegenüber einem Eindringen von Fremdkörpern bzw. -stoffen durch die Fugen zwischen angrenzenden Bodenbelagsoberteilen zu den Grundmodulen verhindert wird. Unter Umständen kann bei einer derartigen Ausgestaltung der Bodenbelagsoberteile auf zusätzliche Dichteinrichtungen zwischen Grundmodul und Bodenbelagsoberteil verzichtet werden.

Gemäß einer weiteren bevorzugten Ausführungsform sind die Grundmodule zur Bildung eines Estrichs geeignet und weisen insbesondere auf ihrer Unterseite einen Estrichersatz auf, der die notwendige Temperatur- und Schallisolierung vornimmt. Die erfindungsgemäße Ausgestaltung des Bodenbelages als Bauelementsatz gestattet es, derartige vorbereitete Grundmodule auf auch geringfügig unebenen Bodenunterbauten auszulegen, ohne daß die Funktionalität des Bodenbelages beeinträchtigt wird.

Gemäß einer weiteren besonders bevorzugten Ausführungsform der Erfindung sind die Verbindungselemente zumindest teilweise als Funktionsverbindungselemente ausgestaltet und umfassen insbesondere chemische, elektrische, elektromagnetische, optische und/oder magnetische Bauelemente, insbesondere elektrische Versorgungsleitungen und -anschlüsse, elektrische, optische und mechanische Sensoren und/oder Aktuatoren, Signalleitungen und -anschlüsse, Kommunikationsmittel, Bussysteme, Signalgeber und/oder Transpondersysteme. Der Einsatz derartiger "multifunktionaler" Verbindungselemente gestattet die Erstellung eines "Multifunktionsbodens" unter Verwendung eines erfindungsgemäßen Bauelementsatzes.

Gemäß einer bevorzugten Ausführungsform umfaßt der Bauelementesatz eine Vielzahl der Grundmodule, wobei jedes der Grundmodule zumindest eine elektrische bzw. optische Signal- und/oder Versorgungsleitung sowie eine Kontakteinrichtung zur elektrischen bzw. optischen Verbindung bzw. Kontaktierung mit zumindest einem zugeordneten, angrenzenden bzw. benachbarten Grundmodul umfaßt. Derartige Signal- und/oder Versorgungsleitungen können in dem Grundmodul integriert sein, beispielsweise wenn dieses als Spritzgußteil hergestellt worden ist. Die bereitgestellten Kontakteinrichtungen der Grundmodule erlauben es, die Signal- und/oder Versorgungsleitungen über eine Vielzahl der Grundmodule weiterzuleiten.

Gemäß einer bevorzugten Ausführungsform umfaßt die Kontakteinrichtung des Grundmoduls ein Hakenbauteil mit einer Kontaktfläche, welche mit einem zugeordneten Hakenbauteil einer Kontakteinrichtung des zugeordneten, angrenzenden Grundmoduls derart zusammenwirkt, daß die Kontaktfläche mit einer Kontaktfläche der Kontakteinrichtung des angrenzenden Grundmoduls in Anlage gelangt. Eine derartige Auslegung der Grundmodule mit hakenartigen Kontakteinrichtungen gestattet eine sichere elektrische Kontaktierung und Weiterleitung von Signal- und Versorgungsleitungen über eine Vielzahl der Grundmodule. An den Hakenbauteilen kann eine zusätzliche elastische Dichteinrichtung vorgesehen sein, welche die elektrische Kontaktierung zwischen angrenzenden Grundmodulen vor einem Eindringen von Feuchtigkeit schützt.

Gemäß einer weiteren bevorzugten Ausführungsform umfaßt jedes der im wesentlichen plattenförmigen Grundmodule zumindest zwei elektrische bzw. optische Signal- und/oder Versorgungsleitungen, die bevorzugt im wesentlichen parallel zur Plattenebene der Grundmodule verlaufen und sich kreuzen und vorzugsweise zueinander im wesentlichen senkrecht angeordnet sind. Ist eine Vielzahl derartiger Signal- und/oder Versorgungsleitungen vorgesehen, so ergibt sich dementsprechend ein gitterähnliches bzw. schachbrettartiges Verkabelungsmuster, wobei beispielsweise in der Aufsicht senkrecht verlaufende Leitungen in einer anderen Ebene (in einer anderen Höhe) in den Grundmodulen geführt werden, als die in der Aufsicht horizontal verlaufenden Leitungen. Um bereitgestellte Funktionsverbindungselemente mit der notwendigen elektrischen Leistung zu versorgen, ist es ausreichend, beispielsweise alle in der Aufsicht senkrecht verlaufenden Leitungen auf ein gegenüber den in der Aufsicht horizontal verlaufenden Leitungen unterschiedliches elektrisches Potential zu legen. Werden die Funktionsverbindungselemente mit Leistungskontaktabschnitten bereitgestellt, die sowohl mit zumindest einer vertikal verlaufenden Leitung als auch mit einer horizontal verlaufenden Leitung elektrisch verbindbar sind, so kann eine elektrische Leistungsversorgung der Funktionsverbindungselemente in einfacher Weise bereitgestellt werden. Mittels einer geeigneten Codierung, beispielsweise einer Hochfrequenzmodulation, können über derartige Leistungsversorgungsleitungen auch Daten übertragen werden, insbesondere von einem Funktionsverbindungselement zu einem anderen oder zu einer externen Zentralstation. Besonders bevorzugt werden in den Grundmodulen jedoch zusätzliche Leitungen vorgesehen, insbesondere wenn hohe Datenübertragungsbandbreiten erforderlich sind.

Gemäß einer weiteren bevorzugten Ausführungsform endet zumindest eine elektrische Signal- und/oder Versorgungsleitung des Grundmoduls vorzugsweise in einem Kontaktabschnitt, der in dessen Modulausnehmung gebildet ist, und ein zugeordnetes Verbindungselement ist derart als Funktionsverbindungselement mit einer Signal- und/oder Versorgungsleitung und einer damit verbundenen Verbindungselementkontakteinrichtung ausgelegt, daß der Kontaktabschnitt bevorzugt elektrisch und/oder optisch mit der Verbindungselementkontakteinrichtung verbindbar ist.

Vorzugsweise umfaßt das Funktionsverbindungselement eine zweite Verbindungselementkontakteinrichtung, die zur elektrischen Kontaktierung eines Kontaktabschnitts einer zweiten Signal- und/oder Versorgungsleitung ausgelegt ist, welche entweder in einem zugeordneten Bodenbelagsoberteil der Bodenbelagsoberteile oder in einem angrenzenden Grundmodul der Grundmodule angeordnet ist. Auf diese Weise ist es möglich, elektrische Signale bzw. elektrische Leistungen über die vorgesehene Leitung in einem Grundmodul über die Verbindungselementkontakteinrichtung in das Funktionsverbindungselement zu überführen, welche ihrerseits eine weitere Verbindungselementkontakteinrichtung umfaßt, die mit einem Kontaktabschnitt einer weiteren Signal- und/oder Versorgungsleitung in einem der Bodenbelagsoberteile oder einem der Grundmodule bereitgestellt ist.

Gemäß der Erfindung wird weiterhin ein Funktionsverbindungselement bereitgestellt zur Verwendung in einem Bauelementesatz für die Erstellung eines Bodenbelags, insbesondere gemäß der Erfindung oder einer Ausführungsform hiervon, mit zumindest einem insbesondere plattenförmigen Grundmodul mit einer Grundmodulunterseite und einer Grundmoduloberseite, wobei die Grundmodulunterseite zum Auslegen eines Bodenbelags auf einem vorbereiteten Bodenunterbau ausgelegt ist und an der gegenüberliegenden, der Begehseite des Bodenbelags zugewandten Grundmoduloberseite zumindest eine Modulausnehmung vorgesehen ist, wobei das Funktionsverbindungselement in die Modulausnehmung einsetzbar ist, in einen insbesondere plattenförmigen Bodenbelagsoberteil eingreifen kann und chemische, elektrische, elektromagnetische, optische und/oder magnetische Bauelemente umfassen, insbesondere elektrische Versorgungsleitungen und -anschlüsse, elektrische, optische und mechanische Sensoren und Aktuatoren, Signalleitungen und -anschlüsse, Kommunikationsmittel, Bussysteme, Signalgeber und/oder Transpondersysteme aufweist.

Die Erfindung wird im folgenden anhand der beigefügten Zeichnungen beispielhaft beschrieben, wobei unterstellt wird, daß Merkmale, die in einzelnen Ausführungsformen beschrieben werden, jeweils mit Merkmalen der anderen Ausführungsformen kombiniert werden können. Es zeigt:
- Figur 1(a): eine schematische Querschnittsansicht durch einen Bodenbelag, der aus einer Ausführungsform eines erfindungsgemäßen Bauelementsatzes für die Erstellung eines Bodenbelags erstellt wurde;
- Figur 1(b): eine schematische Aufsicht auf den Bodenbelag von Figur 1(a), wobei Bodenbelagsoberteile lediglich angedeutet sind;
- Figur 1(c): eine weitere Ausführungsform eines Bodenbelages, der durch eine weitere Ausführungsform eines erfindungsgemäßen Bauelementsatzes erstellt wurde und eine Dichtung aufweist;
- Figur 2: eine weitere Ausführungsform eines Bodenbelags, der durch eine weitere Ausführungsform eines erfindungsgemäßen Bauelementsatzes erstellt wurde und ein weiteres Dichtungssystem aufweist;
- Figur 3: eine weitere bevorzugte Ausführungsform eines Bodenbelags, der durch eine weitere Ausführungsform eines erfindungsgemäßen Bauelementsatzes erstellt wurde und ein weiteres Dichtungssystem sowie eine weitere Ausgestaltung eines Funktionsverbindungselementes aufweist;
- Figur 4: eine Schnittansicht des in Figur 3 gezeigten Bodenbelags;
- Figur 5: eine bevorzugte Ausführungsform eines Grund- bzw. Basismoduls;
- Figur 6: eine bevorzugte Ausführungsform eines Bodenbelagsoberteils, wobei die dem Grund- bzw. Basismodul zugewandte Seite nach oben zeigt;
- Figur 7a, b: eine vereinfachte Darstellung einer bevorzugten Ausführungsform eines in dem Grundmodul angeordneten Bussystems;
- Figur 8a, 8b: eine vereinfachte perspektivische Ansicht zweier Ausführungsformen eines Verbindungskontaktteils zum Verbinden von zwei benachbarten in den Grundmodulen eingebetteten Bussystemen; und
- Figur 9a, 9b: eine nicht-maßstabstreue Darstellung eines Funktionsverbindungselements gemäß einer bevorzugten Ausführungsform.

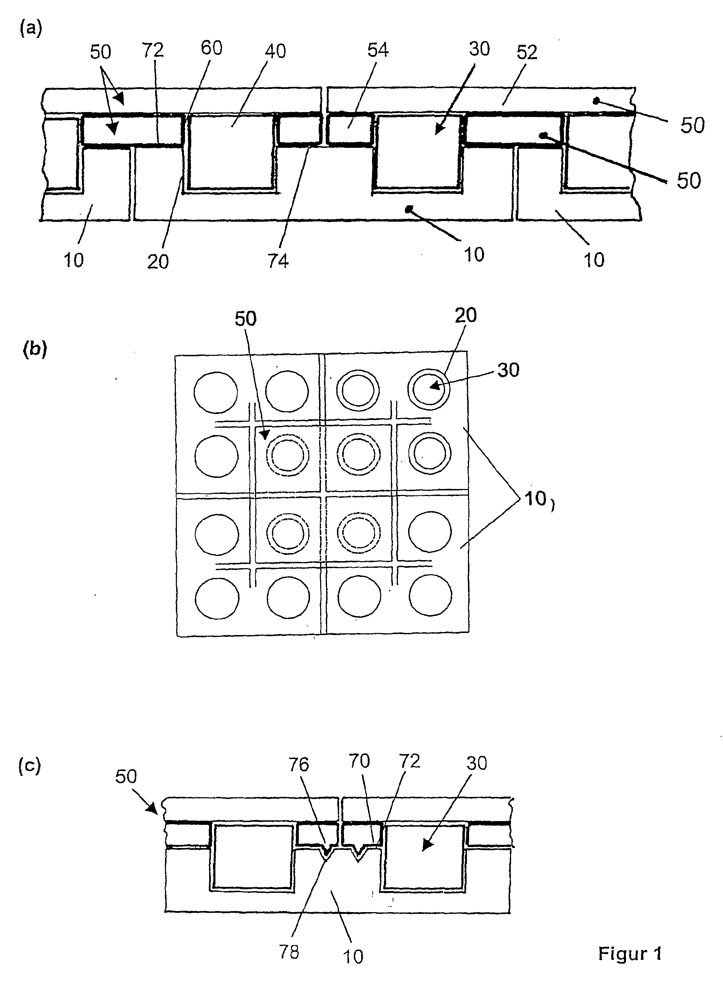

Anhand von Figuren 1(a) und 1(b) wird nachfolgend der Aufbau eines bereits erstellten, d.h. verlegten Bodenbelags beschrieben, der aus Elementen zusammengebaut ist, die in einer ersten Ausführungsform eines erfindungsgemäßen Bauelementesatzes für die Erstellung eines Bodenbelages enthalten sind.

Figur 1(a) zeigt ein Grundmodul 10, welches schwimmend auf einem nicht dargestellten Bodenuntergrund ausgelegt wurde. Benachbarte bzw. angrenzende, weitere Grundmodule 10 des Bodenbelages sind in Figur 1(a) angedeutet. Die Grundmodule 10 weisen eine plattenförmige Gestalt mit einer quadratischen Umfangsform auf und sind als Spritzgußteile aus PVC hergestellt. Jedes Grundmodul 10 hat vier kreisförmig-zylindrische Modulausnehmungen 20, welche zur Aufnahme von Verbindungselementen 30 dienen. Die Modulausnehmungen 20 erstrecken sich hierbei von der Oberseite der Grundmodule 10 in einer vertikalen Richtung, d.h. senkrecht zu der Bodenbelagsebene, in das Grundmodul 10, so daß die verbleibende Grundmoduistärke im Bereich der Modulausnehmungen 20 klein gegenüber der Gesamtstärke bzw. -höhe der Grundmodule 10 ist. Die vier Modulausnehmungen 20, die jedes Grundmodul 10 aufweist, sind derartig im Grundmodul 10 angeordnet, daß sie bei einer flächendeckenden, den Bodenbelag lückenlos bildenden Verlegung der Grundmodule 10 in einer matrixartigen Weise, wie sie in Figur 1(b) dargestellt ist, ein regelmäßiges matrixartiges Anordnungsmuster bilden, wobei die Abstände zwischen horizontal und vertikal benachbarter Modulausnehmungen 20 gleich sind, d.h. die Modulausnehmungen in einem quadratischen Raster schachbrettartig angeordnet sind.

Wie in Figur 1(a) dargestellt ist, sind in die Modulausnehmungen 20 die Verbindungselemente 30 derart eingesetzt, daß ein Verbindungsabschnitt 40 über die Oberseite der Grundmodule 10 vorspringt. In Figur 1(a) sind zwei Bodenbelagsoberteile 50 (unvollständig) dargestellt, welche in vertikaler Richtung, d.h. senkrecht zur Plattenebene der Grundmodule 10, die Grundmodule 10 und Verbindungselemente 30 überlagernd angeordnet sind. Wie in Figur 1(b) gezeigt ist, weisen die Bodenbelagsoberteile 50 die gleiche quadratische umfängliche Gestalt mit gleichen Kantenlängen wie die Grundmodule 10 auf. Die Bodenbelagsoberteile 50 sind derart ausgestaltet, daß sie überlappend auf die Grundmodule 10 und die Verbindungselemente 30 angeordnet werden können, so daß die Ecken der im wesentlichen plattenförmigen Bodenbelagsoberteile 50 senkrecht über den Mittelpunkten der zugeordneten Grundmodule 10 angeordnet sind. Demgemäß sind die Mittelpunkte der Bodenbelagsoberteile 50 senkrecht über den Berührungspunkten von jeweils vier angrenzenden Grundmodulen 10 angeordnet, wie in Figur 1(b) dargestellt ist.

Die Bodenbelagsoberteile 50 bestehen aus einer Designschicht 52 und einer Basisschicht 54, die an der Unterseite der Designschicht 52, d.h. der Begehfläche des Bodenbelags abgewandten Seite der Designschicht, angebracht ist. Die Basisschicht 54 ist ein gitterartiges Stanzbauteil, das an der Designschicht 52 über eine Verklebung befestigt ist. Es ist ebenfalls möglich, die Basisschicht 54 durch Hinterspritzen der Designschicht 52 zu bilden, sofern die Materialeigenschaften der Designschicht, insbesondere dessen Temperaturempfindlichkeit, dies zulassen. Die Basisschicht 54 weist eine Vielzahl von periodisch angeordneten, kreisförmig-zylindrischen Durchbrüchen auf, die in Verbindung mit der Designschicht 52 Belagsoberteilausnehmungen 60 bilden. Der Durchmesser der kreisförmig-zylindrischen Belagsoberteilausnehmungen 60 entspricht hierbei dem Durchmesser der Modulausnehmungen 20. Die Belagsoberteilausnehmungen 60 sind in der gleichen quadratisch-gitterförmigen Weise mit gleicher Gitterperiode angeordnet, wie dies zuvor bei den Modulausnehmungen 20 beschrieben wurde. Die Basisschicht 54 und Designschicht 52 jedes Bodenbelagsoberteils 50 sind derart ausgelegt, daß die Bodenbelagsoberteile 50, wie zuvor beschrieben, in überlappender Weise auf die Grundmodule 10 angeordnet werden können, so daß die Verbindungsabschnitte 40 der Verbindungselemente 30 in die Belagsoberteilausnehmungen 60 formschlüssig eingreifen. In diesem Zustand gelangen Auflageflächen 72 an der Grundmoduloberseite mit zugeordneten Auflageflächen 70 an der Unterseite der Basisschichten 54 in flächige Anlage, so daß eine Lastableitung in diesen Bereichen direkt von den Bodenbelagsoberteilen 50 zu den Grundmodulen 10 erfolgen kann.

Vorteilhafterweise ergibt dieser im wesentliche dreiteilige Aufbau des Bodenbelags, bestehend aus Grundmodulen 10, Verbindungselementen 30 und Bodenbelagsoberteilen 50, einen flächenstabilen Bodenbelag, ohne daß zusätzliche, die einzelnen Bodenbelagselemente verbindende Fixiermittel, wie beispielsweise Klebstoffe, verwendet werden müssen. Dies ermöglicht eine besonders schnelle, einfache und lösbare Verlegung eines Bodenbelages. So können die Bodenbelagsoberteile 50 jederzeit durch einfaches senkrechtes Anheben entfernt und falls erforderlich ersetzt werden.

In Figur 1(c) ist eine weitere bevorzugte Ausführungsform eines mit einem erfindungsgemäßen Bauelementsatzes aufgebauten Bodenbelags gezeigt. Im Unterschied zu der in Figur 1(a) dargestellten Ausführungsform ist hier im Bereich der Auflageflächen 70, 72 der Basisschichten 54 und Grundmodule 10 eine umlaufende Keildichtung vorgesehen. An der Auflagefläche 70 der Basisschicht 54 springt ein keilförmiger Vorsprung 76 in Richtung der Grundmoduloberseite vor und wird durch einen entsprechend formschlüssig gestalteten Rücksprung 78 in der Auflagefläche 72 an der Oberseite des Grundmoduls 10 aufgenommen. Bevorzugt ist der Keilwinkel des keilförmigen Vorsprungs 76 derart gewählt, daß eine selbsthemmende Wirkung der so erzeugten Keildichtung eintritt. Auf diese Weise kann effektiv verhindert werden, daß Fremdkörper, wie beispielsweise Staub oder Flüssigkeit, durch eine Fuge 80 in den Bereich der Verbindungselemente 30 gelangen kann.

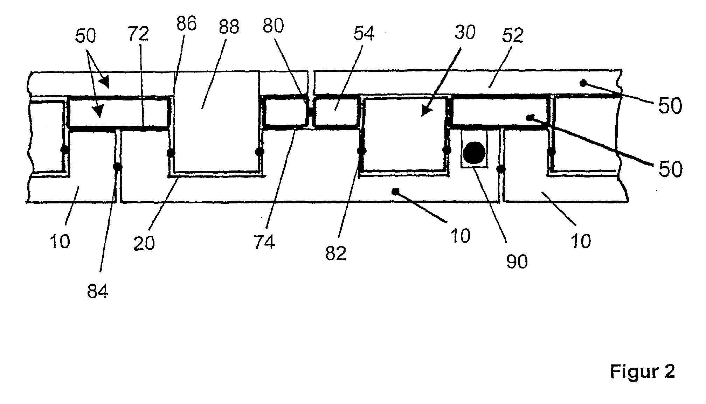

Figur 2 zeigt eine weitere Ausführungsform eines erfindungsgemäßen Bodenbelags, wobei Bauteile, die den in Figur 1 genannten Bauteilen entsprechen, mit gleichen Bezugszeichen bezeichnet sind. Um eine weiter verbesserte Abdichtung gegen Fremdkörper, insbesondere Flüssigkeiten, herbeizuführen, weist diese Ausführungsform Klemm- bzw. O-Ring-Dichtungen auf, welche vorzugsweise aus einem elastisch deformierbaren Material, beispielsweise Gummi, hergestellt sind. Insbesondere ist eine Klemmdichtung 80 zwischen angrenzenden Seitenflächen der Basisschicht 54, eine Klemmdichtung 82 zwischen dem Grundmodul 10 und dem Verbindungselement 30 sowie eine Klemmdichtung 84 zwischen Seitenflächen angrenzender Grundmodule 10 vorgesehen.

Ferner ist in der Designschicht 52 der in Figur 2 dargestellten Ausführungsform eine Designschichtausnehmung 86 vorgesehen, durch welche ein Verbindungselement bzw. Funktionsverbindungselement 88 in die Modulausnehmung 20 des Grundmoduls 10 eingesetzt werden kann. Die obere Stirnseite dieses Verbindungselements 88 umfaßt eine Designauflage, welche farblich und materialmäßig an die Designschicht 52 angepaßt sein kann. Falls zusätzliche elektrische Leitungen in dem Bodenbelag untergebracht werden sollen, können in den Grundmodulen 10 zusätzliche Kabelkanäle 90 vorgesehen werden, welche zur Aufnahme dieser Leitungen dienen.

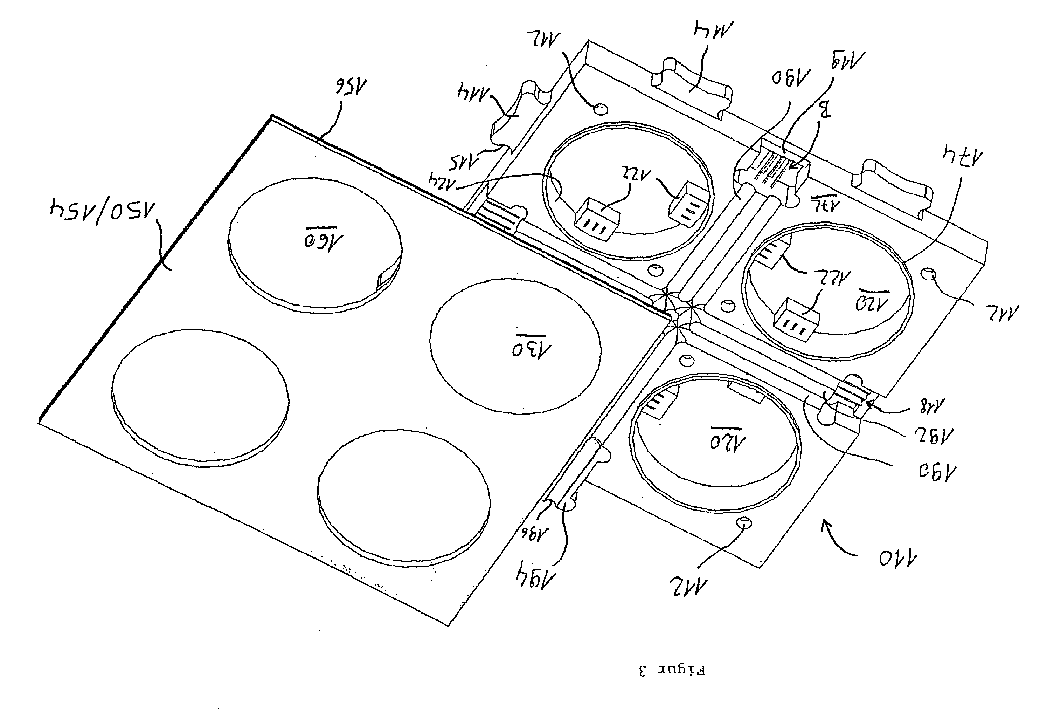

Ein weiterer bevorzugter Bodenbelag, der anhand eines Bauelementesatzes gemäß einer bevorzugten Ausführungsform der Erfindung zusammengesetzt bzw. erstellt wurde, ist in den Figuren 3 bis 9 dargestellt, wobei Elemente mit gleichen oder ähnlichen Funktionen wie in den vorangehenden Ausführungsformen (d.h. sich entsprechende Elemente des Bauelementesatzes) der besseren Verständlichkeit halber ein um 100 erhöhtes Bezugszeichen aufweisen.

Der Bodenbelag umfaßt ein Grund- bzw. Basismodul 110, das an einem geeignet vorbereitete Boden bzw. Unterboden, z.B. auf einem Estrich verlegbar ist. Das Grundmodul 110 weist eine Vielzahl (in den Figuren vier) von Ausnehmungen bzw. Freiräume bzw. Rücksprünge 120 auf, in welche nachfolgend näher zu beschreibende Funktionsverbindungselemente 130 zumindest teilweise aufnehmbar sind, wobei die Ausnehmungen 120 und die Funktionsverbindungselemente 130 bevorzugt aneinander angepaßte Ausgestaltungen bzw. Formen haben. Im gezeigten Beispiel sind der Innenumfang der Ausnehmungen 120 und der Außenumfang der Funktionsverbindungselemente 130 zylindrisch ausgebildet, jedoch ist auch eine davon abweichende Form denkbar, z.B. konisch, zulaufend, polygonartig, rechteckig, quadratisch, usw. An Auflageflächen 172 auf bzw. an dem Grundmodul 110 ist ein Bodenbelagsoberteil 150 über eine entsprechende Auflagefläche 170 anordenbar, wobei das Bodenbelagsoberteil 150 den Funktionsverbindungselementen 130 entsprechende Bodenbelagsoberteilausnehmungen 160 aufweist, durch die jeweils ein Funktionsverbindungselement 130 zumindest teilweise durchragen bzw. vorspringen kann. Vorzugsweise schließen das Bodenbelagsoberteil 150 und das Funktionsverbindungselement 130 bei am Grundmodul 110 angeordneten Zustand im wesentlichen bündig an, so daß eine (nicht dargestellte) Designschicht auf dem Bodenbelagsoberteil 150 sowie dem Funktionsverbindungselement 130 anordenbar ist ohne Aufwerfungen aufzuweisen. Das Bodenbelagsoberteil 150 sowie das Funktionsverbindungselement 130 weisen bevorzugt schwingungsdämfende Eigenschaften bevorzugt in Zusammenwirkung mit dem Grundmodul 110 auf.

Nachfolgend wird das Grundmodul 110 näher in bezug auf die Figuren 3 bis 5 beschrieben.

Das Grundmodul 110, insbesondere dessen Auflagefläche 172, weist zumindest teilweise in einem Randbereich der Modulausnehmungen 120 bevorzugt Aufnahmevorsprünge 174 auf, welche zur Aufnahme des entsprechenden Funktionsverbindungselements 130 und/oder der entsprechenden Belagsoberteilausnehmung 160 dienen. Der Aufnahmevorsprung 174 weist bevorzugt eine Höhe auf, die geringer als eine Dicke des Bodenbelagsoberteils 150 ist. Die Funktionsverbindungselemente 130 weisen bevorzugt einen Randvorsprung 132 auf, welcher dem Aufnahmevorsprung 174 entspricht und mit diesem zusammenwirkt, so daß der Aufnahmevorsprung 174, der Randvorsprung und die Belagsoberteilausnehmung 160 eine verbesserte Abdichtwirkung bereitstellen.

Das Grundmodul 110 weist bevorzugt einen oder mehrere Kabelkanäle 190 auf, in welche (nicht gezeigte) Kabel zum übertragen von Strom, elektrischen und/oder optischen Signalen angeordnet werden können. Die Kabelkanäle 190 sind bevorzugt über Kreuz angeordnet, d.h. erstrecken sich jeweils um einen Winkel (im Beispiel um etwa 90°) verdreht zueinander. Weiterhin sind parallel verlaufende Kanäle 190 bevorzugt durch einen Steg 192 getrennt, der in Zusammenwirkung mit einer entsprechenden Kante bzw. Randbereich des Bodenbelagsoberteil 150 eine zusätzliche Dichtwirkung zur Verfügung stellt. Falls Feuchtigkeit bzw. Wasser in einen unteren Bereich des Bodenbelagsoberteils 150 treten sollte, kann diese(s) von den Kabelkanälen 190 aufgenommen werden. Somit ergibt sich bei einer Vielzahl von zusammengesetzten bzw. verbundenen Grundmodulen 110 eine schachbrettartige Konfiguration des Bussystems B, welches besonders ausfallsicher ist.

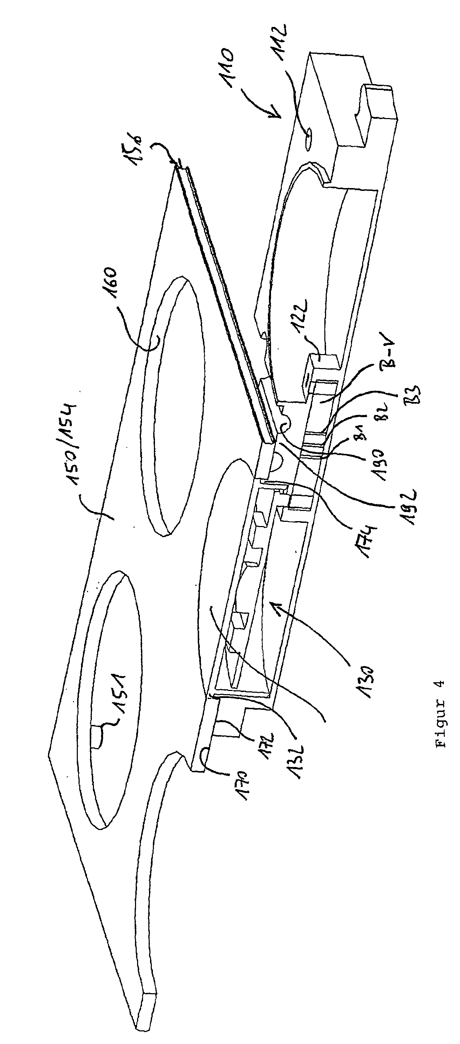

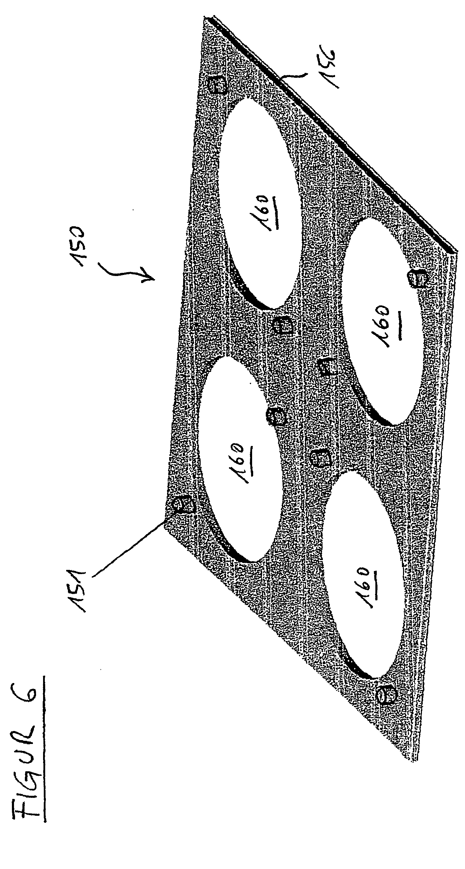

Das Grundmodul 110 weist bevorzugt eine Vielzahl von Rücksprüngen bzw. Löcher 112 auf, welche Vorsprünge 151 aufnehmen können (Figuren 4 und 6), die in entsprechenden Positionen an der dem Grundmodul 110 zugewandten Seite des Bodenbelagsoberteils 150 vorgesehen sind. Diese Vorsprünge 151 dienen einer Zentrierung des Bodenbelagsoberteils 150 bezüglich des Grundmoduls 110. Bevorzugt können (insbesondere an den Rand- bzw. Eckbereichen des Bodenbelagsoberteils 150) die Vorsprünge 151 hinterschnitten und die Rücksprünge entsprechend ausgeweitet sein (nicht gezeigt), so daß vorteilhaft ein Abheben bzw. Wölben insbesondere der Ecken des Bodenbelagsoberteils 150 verhindert werden kann.

Bevorzugt weist das Grundmodul 110 eine Rastverbindung auf, die zumindest einen Rastvorsprung 114 und zumindest einen entsprechenden Rastrücksprung 116, welcher mit einem entsprechenden Rastvorsprung 114 einrastbar ist. Die Rastverbindung eines Grundmoduls 110 dient zum Verrasten mit einem benachbarten Grundmodul 110, um eine Verlegung des Bodenbelags zu erleichtern. IN Gebrauch, können benachbarte Grundmodule 110 durch entsprechende Ausrichtung zueinander miteinander verbunden werden, so daß schon vor dem Anordnen des Bodenbelagsoberteils 150 eine relative Positionierung vorteilhaft möglich ist. Die Rastvorsprünge 114 weisen bevorzugt eine Hinterschneidung 115 auf, welche eine verbesserte Rasteigenschaft ermöglichen.

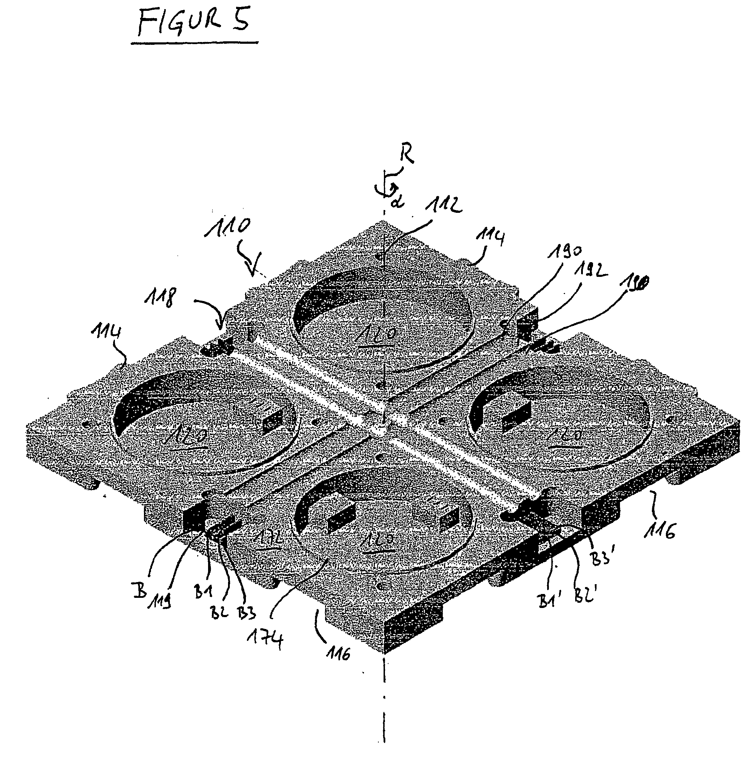

Das Grundmodul 110 ist bevorzugt derart ausgestaltet, daß es rotationssymmetrisch ist, und zwar bei Rotation bevorzugt um einen Winkel α=90° um eine auf die Ebene des Grundmoduls 110 senkrecht angeordnete, durch den geometrischen Mittelpunkt verlaufende Achse R (FIG. 5).

Dementsprechend sind z.B. zwei Paare von Rastvorprüngen 114 und zwei Paare von Rastrücksprüngen 116 pro Grundmodul 110 vorgesehen.

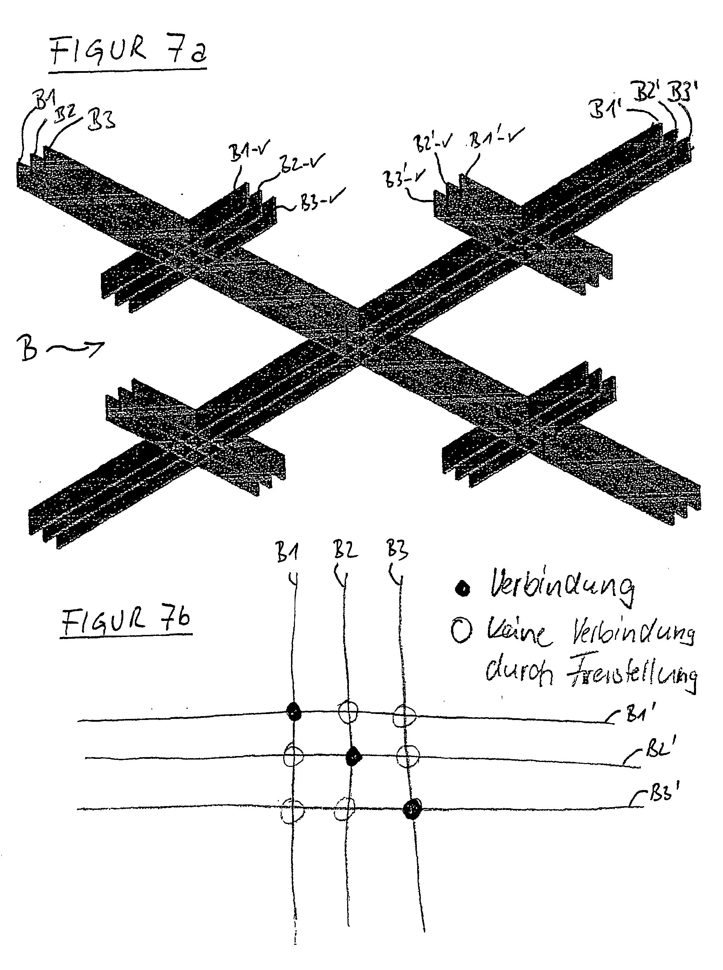

Weiterhin bevorzugt ist in dem Grundmodul 110 ein Leitungs- bzw. Bussystem B vorgesehen, welches bevorzugt eine Vielzahl von Leitungen B1-B3, B1'-B3' aufweist. Z.B. kann B1, B1' als Phase, B2, B2' als Nulleiter und B3, B3' als Masse dienen. Die Leitungen B1-B3, B1'-B3' sind vorteilhafterweise in dem Grundmodul 110 z.B. durch Eingießen eingebracht und verlaufen jeweils von einem Seitenrand zum gegenüberliegenden Seitenbereich des Grundmoduls 110. Bevorzugt sind die Leitungen B1-B3 und B1'-B3' einander kreuzend angeordnet und sind in einem Zentralbereich des Grundmoduls 110 paarweise miteinander verbunden, d.h. B1 mit B1', B2 mit B2' und B3 mit B3' sind elektrisch und/oder optisch miteinander verbunden wie schematisch in Figur 7b gezeigt ist. Bevorzugt sind die Leitungen B1-B3 und B1'-B3 unter einem Winkel von 90° zueinander angeordnet, jedoch sind auch andere Winkelanordnungen denkbar. Diese kreuzweise Anordnung der Leitungen B1-B3, B1'-B3' in dem Bussystem B ermöglicht eine zuverlässige Verlegung des Bussystems B als ein ausfallsicheres Netzwerk, da zwischen zwei entfernt voneinander angeordneten Punkten des Netzwerks eine Vielzahl von Verbindungen bzw. Pfade möglich ist. Des weiteren ermöglicht die Kreuzanordnung der Leitungen B1-B3, B1'-B3' in dem Bussystem B vorteilhaft auch entfernte Ecken bzw. "Sackgassen" des Bodenbelags ohne Mehraufwand und sicher zu erreichen.

Die Leitungen B1-B3, B1'-B3 sind geeignet, wie später näher erläutert die Funktionsverbindungselemente 130 mit Strom bzw. Spannung zu versorgen und/oder von bzw. zu diesen optische und/oder elektrische Signale zu übertragen.

In den Modulausnehmungen 120 sind bevorzugt Kontakteinrichtungen bzw.-verbinder 122 vorgesehen zum Übertragen von Strom und/oder Signalen von dem Bussystem B zu dem entsprechenden in der Modulausnehmung 120 angeordneten bzw. eingesetzten Funktionsverbindungselement 130. Jeweils in der Kontakteinrichtung 122 vorgesehene elektrische und/oder optische Paßstücke sind über Leitungsverbindungsteile B-V (Figur 4) bzw. B1-V bis B3-V, B1'-V bis B3'-V (Figur 7a) mit den jeweiligen Leitungen B1-B3, B1'-B3 verbunden, welche in einer ähnlichen Weise wie die Leitungen B1-B3, B1'-B3 (siehe Figur 7b) mit diesen verbunden paarweise sind. Vorzugsweise sind jeweils zwei Kontakteinrichtungen 122 pro Modulausnehmung 120 vorgesehen, so daß diese ebenfalls als Verdrehschutz dienen können. Weiterhin bevorzugt sind die Kontaktiereinrichtungen 122 nach der VDE-Norm ausgebildet, so daß eine einfache elektrische Verbindung bzw. Installation möglich ist.

Falls eine Datenübertragung z.B. mit hohen Raten oder besonders störanfällige Signalübertragungen vorgenommen werden sollen kann das Bussystem B abgeschirmt sein, z.B. durch einen weiteren um die Leitungen B1-B3, B1'-B3' angeordneten Nulleiter bzw. durch umfängliches Anordnen einer als Nulleiter und/oder Masse ausgestalteten Leitung des Bussystems selbst. Auch ist es vorteilhaft, daß Basismodul 110 selbst leitend zu gestalten, z.B. durch Beigabe eines leitenden Materials bzw. Partikel (z.B. Ruß) zu der für das Gießen der Grundmoduls 110 verwendeten Gußmasse bzw. -material und durch Erden des Basismoduls.

Das Bussystem ist bevorzugt an vier Stellen durch entsprechende Bussystemverbindungsausnehmungen 118 von außen zugänglich, so daß das Bussystem B mit Bussystemen B von benachbarten Grundmodulen 110 (Signal-) verbunden werden kann.

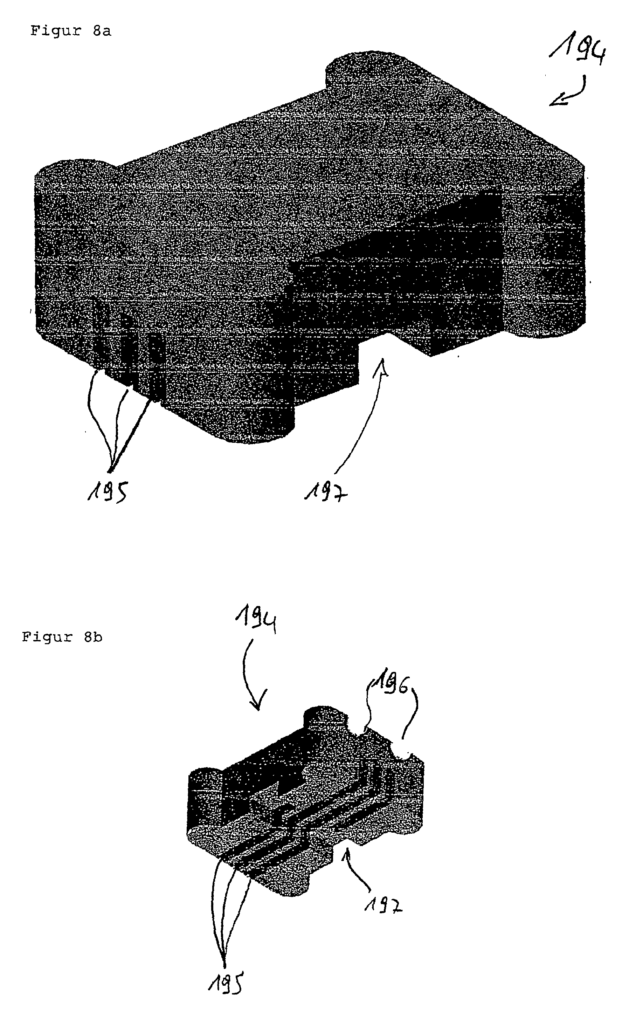

Die Verbindung zweier Bussystemen (B) findet bevorzugt durch Verbindungskontaktteilen 194 (Figur 3) statt, welche in Bezug auf Figur 8a und 8b näher beschrieben werden.

Die Verbindungskontaktteilen 194 sind bevorzugt aus einem dichtenden Werkstoff z.B. aus TPE gebildet. Vorzugsweise können an den Verbindungskontaktteilen 194 Dichtlippen (nicht gezeigt) angebracht sein, um einen verbesserten Form- und/oder Kraftschluß zum Grundmodul 110 hin zu gewährleisten. Die Verbindungskontaktteilen 194 sind bevorzugt entsprechend bzw. komplementär zu den in dem Grundmodul 110 vorgesehenen Bussystemverbindungsausnehmungen 118 ausgestaltet und weisen eine Vielzahl von Kontaktkämmen 195, welche darin eingebettet, bevorzugt eingespritzt sind. Die Kontaktkämme 195 sind derart angeordnet, daß sie mit der jeweiligen Leitung B1-B3, B1'-B3' des Bussystems B in Kontakt gebracht werden kann, um diese mit den entsprechenden Leitungen B1-B3, B1'-B3' des benachbarten Grundmoduls 110 zu verbinden. Das Verbindungskontaktteil 194 weist bevorzugt eine Vielzahl von Kanälen 196 auf deren dem Bodenbelagsoberteil 150 zugewandten Seite auf (nur in Figuren 3 und 8b gezeigt), und zwar in Positionen entsprechend den Kabelkanälen 190 des Grundmoduls 110, so daß Kabel geeignet über das Verbindungskontaktteil 194 hinweg verlegt werden können.

Weiterhin bevorzugt umfaßt das Verbindungskontaktteil 194 eine Ausnehmung 197 auf, welche einem Vorsprung 119 der Bussystemverbindungsausnehmung 118 entspricht. Dieser Vorsprung 119 (z.B. entsprechend einer Erhöhung von etwa 8 mm) erlaubt eine höhere Dichtheit zum Unterboden zu gewährleisten, auf welchem das Grundmodul 110 angeordnet wird, da falls sich auf dem Unterboden Wasser ansammelt, erst ein Pegelstand entsprechend der Höhe des Vorsprunges 119 erreicht werden muß, bevor Wasser in die Bussystemverbindungsausnehmung 118 eintritt. Darüber hinaus gewährleistet das Zusammenwirken von Vorsprung 119 und Rücksprung 197 eine vorteilhaft bessere mechanische Verbindung zwischen zwei benachbarten Grundmodulen 110.

Es sollte verstanden werden, daß das Grundmodul 110 generell an einem Boden angebracht wird. Es kann jedoch ebenfalls, z.B. um Stufen oder Höhenunterschiede auszugleichen, an vertikalen Flächen angebracht werden. Die entsprechenden mechanischen und elektrischen/optischen Verbindungselemente bzw. Verbindungsbereiche können dann für gewisse Verbindungsbereiche entsprechend angewinkelt vorgesehen sein.

Das Bodenbelagsoberteil 150 wird nachfolgend in bezug auf Figuren 3, 4 und 6 näher beschrieben werden. Wie schon vorangehend beschrieben, weist das Belagsoberteil 150, bzw. eine Basisschicht 154 hiervon eine Vielzahl Belagsoberteilsausnehmungen 160 auf, durch welche hindurch bzw. in welche Funktionsverbindungselemente 130 angeordnet bzw. zumindest teilweise eingeführt werden können. Randbereiche des Bodenbelagsoberteils 150 sind bevorzugt als Nut-und-Feder-Bereich 156 ausgebildet, d.h. z.B. zwei Randbereiche als Nut und zwei andere Randbereiche als Feder, so daß bei benachbart angeordneten Bodenbelagsoberteilen 150 eine verbesserte Dichtwirkung erzielbar ist.

Auf dem Bodenbelagsoberteil 150 kann, falls erwünscht, ein (bevorzugt modularer) Bodenbelag z.B. eine Designfliese als eine Designschicht (nicht gezeigt) fest angeordnet werden, z.B. durch Verkleben.

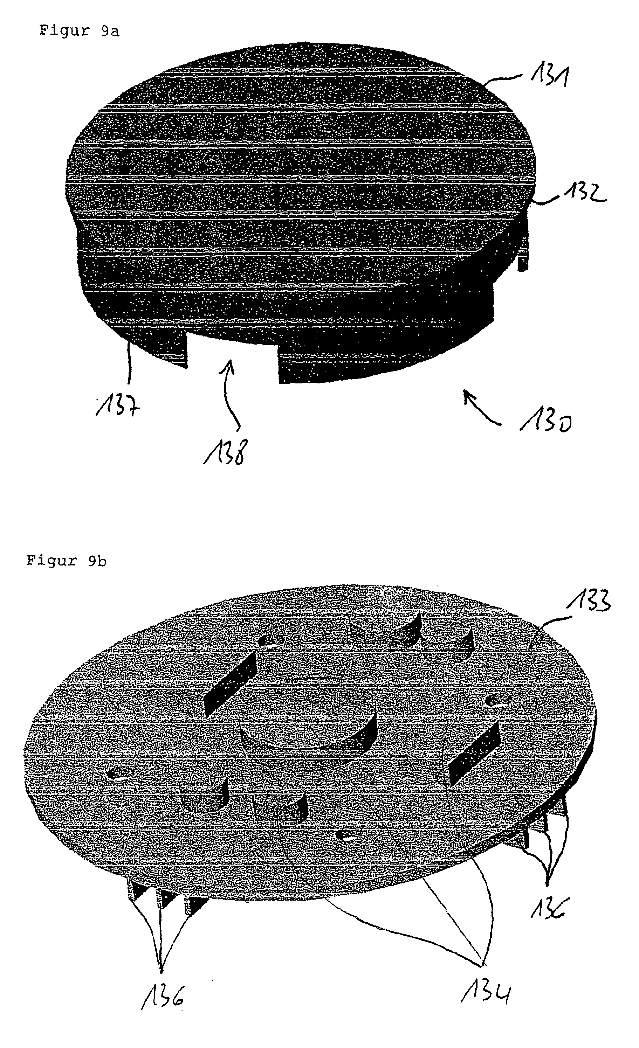

Nachfolgend werden die Funktionsverbindungselemente 130 in bezug auf Figuren 4, 9a und 9b beschrieben (welche nicht maßstabstreu sind).

Das Funktionsverbindungselement 130 weist, wie vorangehend beschrieben, ein zur Modulausnehmung 120 des Grundmoduls 110 komplementäre bzw. entsprechende Gestalt auf. Das Funktionsverbindungselement 130 weist bevorzugt ein Gehäuseteil 131 auf, das den Randvorsprung 132 sowie einen seitlichen Wandabschnitt 137 aufweist, welcher bevorzugt dichtend an einen Innenwandabschnitt 124 der Modulausnehmung 120 anliegen kann. Der Wandabschnitt 137 weist in Positionen entsprechend den Kontakteinrichtungen 122 der Modulausnehmung 120 Ausnehmungen 138 zur Aufnahme der Kontakteinrichtungen 122 bei Anordnung des Funktionsverbindungselements 130 in der Modulausnehmung 120 auf, welche vorteilhaft einen Verdrehschutz darstellen. Das Gehäuseteil 131 kann je nach Belastung mit Rippen verstärkt sein.

Innerhalb des Gehäuseteils 131 kann, falls erwünscht ein Funktionsbauteil 133 angeordnet werden, welches für die Funktion geeignete bzw. erforderliche Bauteile bzw. Elemente 134 aufweist, die mittels Kontakten 136 mit den Kontakteinrichtungen 122 der Grundmodule 110 verbunden werden können, falls erwünscht. Die Bauteile bzw. Elemente können bevorzugt umfassen: (z.B. Wärme-, Strahlungs-, Feuchtigkeits-, Druck-, magnetische, optische) Sensoren, Aktuatoren, Licht- bzw. Strahlungsquellen, Sender/Empfänger, Telekommunikationseinrichtungen (z.B. Modem, Telephon- bzw. Faxendgeräte). Falls erwünscht können die Funktionsbauteile 133 in dem Gehäuseteil 131 eingegossen sein, um z.B. eine erhöhte Stabilität zu gewährleisten. Weiterhin können die Bauteile bzw. Elemente 134 ebenfalls Stecker bzw. Dosen und/oder Licht- bzw. Strahlungsquellen aufweisen, welche dann bevorzugt durch das Gehäuseteil 131 hindurchragen (nicht gezeigt). In diesem Fall werden die Funktionsverbindungselemente 130 das Bodenbeiagsoberteil 150 (und daran angeordneten Bodenbelägen) herausragen bzw. durch diesen zugänglich sein.

Somit dienen die Funktionsverbindungselemente 130 sowohl als Verbindungselemente zwischen Grundmodul 110 und Bodenbelagsoberteil 150 und/oder Designschicht als auch zur Stabilisierung des Bodenbelags. Darüber hinaus stellen die Funktionsverbindungselemente 130 ebenfalls eine Funktionalität insbesondere in Verbindung mit dem Bussystem B bereit, wie Beleuchtungselemente, Drucksensoren, als (Not-) Leitsystem z.B. mittels entsprechender Sendern/Empfängern (z.B. um Behinderten einen behindertengerechten Weg anzugeben), als Überwachungssystem bzw. Alarmsystem mittels entsprechender magnetischen, druck-, wärme-, feuchtigkeitsempfindlichen Sensoren. Darüber hinaus können über die Funktionsverbindungselemente 130 auch Steckdosen z.B. für die Stromversorgung (Powerlinesystem), für Computernetzwerke, Telekommunikationssysteme (z.B. Telephon, Fax, Internet usw.) bereitgestellt werden durch eine entsprechende Ausgestaltung des Bussystems B und der Funktionsverbindungselemente 130. Weiterhin ist durch die Austauschbarkeit der Funktionsverbindungselemente 130 ein erhöhtes Maß an Flexibilität gewährleistet.

Es ist jedoch nicht notwendig, daß sämtliche Funktionsverbindungselemente 130 des Bodenbelags tatsächlich mit Funktionen ausgestattet sind. Vielmehr bietet der Bauelementsatz eine flexible Möglichkeit, dort eine bestimmte Funktionalität bereitzustellen, wo sie auch benötigt wird, so daß hierdurch Kosten eingespart wird. An den Orten, wo keine besondere Funktionalität bereitgestellt werden muß (zumindest vorübergehend), können Funktionsverbindungselemente 130 ohne besondere Funktion, d.h. Blind-Funktionsverbindungselemente 130 vorgesehen werden, welche z.B. lediglich das Gehäuseteil 131 ohne Funktionsteil 133 aufweist.

Der mittels der Funktionsverbindungselemente 130 bereitgestellte Multifunktionsboden ermöglicht eine Vielzahl von Anwendungen, insbesondere im Bereich der Gebäudeautomatisierung. Z.B. können die Funktionsverbindungselemente 130 zur Verbindung mit auf dem Bodenbelag angeordneten Gegenständen benutzt werden, z.B. mit darauf angeordneten Regalen, die z.B. über die Funktionsverbindungselemente 130 entsprechend verdrahtet werden können. Des weiteren kann z.B. über geeignete Drucksensoren in den Funktionsverbindungselementen 130 in Kaufhäusern Kundenbewegungen registriert werden, z.B. über welchen Weg die meisten Kunden laufen oder an welchem Regal die meisten Kunden stehenbleiben. Auch kann über den Multifunktionsboden ein mannloses Transportsystem in einem Bereich eingesetzt werden , wo sich auch Personen bewegen bzw. aufhalten, z.B. durch Erfassen mittels Drucksensoren in den Funktionsverbindungselementen 130 wo sich gerade Personen aufhalten bzw. bewegen und durch Fernhalten von mannlosen Transportern von diesem Bereich, indem ein Sicherheitsabstand eingehalten wird, innerhalb dessen, sich keine mannlose Transporter aufhalten dürfen. Weiterhin können auch Hindernisse (z.B. abgestellte Palette) für ein mannloses Transportsystem erfaßt werden und die Transporter entsprechend umdirigiert werden.

### Bezugszeichenliste

- 10, 110: Grundmodul
- 112: Rücksprünge
- 114: Rastvorsprünge
- 115: Hinterschneidung
- 116: Rastrücksprünge
- 118: Bussystemverbindungsausnehmungen
- 119: Vorsprung
- 20, 120: Modulausnehmung
- 122: Kontakteinrichtungen
- 124: Innenwandabschnitt
- 30, 130: Verbindungselement bzw. Funktionsverbindungselement
- 131: Gehäuseteil
- 132: Randvorsprung
- 133: Funktionsteil
- 134: für die Funktion des Funktionsteils 133 geeignete Bauteile bzw. Elemente
- 136: Kontakte
- 138: Ausnehmung
- 173: Wandabschnitt
- 40: Verbindungsabschnitt
- 50, 150: Bodenbelagsoberteil
- 151: Vorsprünge
- 52: Designschicht
- 54, 154: Basisschicht
- 156: Nut-und-Feder-Bereich
- 60, 160: Belagsoberteilausnehmung
- 70, 170: Auflagefläche an Unterseite des Bodenbelagsoberteils
- 72, 172: Auflagefläche an Oberseite des Grundmoduls
- 174: Aufnahmevorsprünge
- 76: Dichtungsvorsprung der Keildichtung
- 78: Dichtungsrücksprung der Keildichtung
- 80: Klemmdichtung
- 82: Klemmdichtung
- 84: Klemmdichtung
- 86: Designschichtausnehmung
- 88: Verbindungselement bzw. Funktionsverbindungselement
- 90, 190: Leitungs- bzw. Kabelkanal
- 192: Steg
- 194: Verbindungskontaktteilen
- 195: Kontaktkämmen
- 196: Kanal

## Patentansprüche

1. Bauelementesatz für die Erstellung eines Bodenbelags mit
- zumindest einem insbesondere plattenförmigen Grundmodul (10; 110) mit einer Grundmodulunterseite und einer Grundmoduloberseite, wobei die Grundmodulunterseite zum Auslegen eines Bodenbelags auf einem vorbereiteten Bodenunterbau ausgelegt ist und an der gegenüberliegenden, der Begehseite des Bodenbelags zugewandten Grundmoduloberseite zumindest eine Modulausnehmung (20; 120) vorgesehen ist,
- zumindest einem Verbindungselement (30; 130), welches derart in die Modulausnehmung (20; 120) einsetzbar ist, daß ein Verbindungsabschnitt (40) des Verbindungselements (30; 130) über die Grundmoduloberseite in Richtung der Begehfläche vorspringt, und
- zumindest einem insbesondere plattenförmigen Bodenbelagsoberteil (50; 150), dessen Oberseite als Teil der Begehfläche ausgelegt ist und an dessen dem Grundmodul (10; 110) und dem Verbindungselement (30; 130) zugewandten Unterseite zumindest eine Belagsoberteilausnehmung (60; 160) vorgesehen ist, in welche der Verbindungsabschnitt (40) des zugeordneten Verbindungselements (30; 130) eingreift.

2. Bauelementsatz nach Anspruch 1, wobei die Modul- und/oder Belagsoberteilausnehmung (20, 60; 120, 160) ausgelegt sind, das Verbindungselement (30; 130) formschlüssig aufzunehmen und vorzugsweise eine Verrasteinrichtung zum Verrasten der Modul- und/oder Belagsoberteilausnehmung (20, 60; 120, 160) mit dem Verbindungselement (30; 130) umfassen.

3. Bauelementsatz nach Anspruch 1 oder 2, wobei Auflageflächen (72; 172) der Grundmoduloberseite, welche an die Modulausnehmung (20; 120) angrenzen, zumindest teilweise flächig mit zugeordneten Auflageflächen (70; 170) der Unterseite des Bodenbelagsoberteils (50; 150) zur Anlage kommen.

4. Bauelementsatz nach einem der vorherigen Ansprüche, wobei das Bodenbelagsoberteil (50; 150) eine insbesondere plattenförmige Designschicht (52), dessen Oberseite als Teil der Begehfläche ausgelegt ist, und eine Basisschicht (54; 154), die an der Unterseite der Designschicht (52) angebracht ist, umfaßt.

5. Bauelementsatz nach Anspruch 4, wobei die Basisschicht (54; 154) insbesondere plattenförmig ist und an seiner der Designschicht (52) abgewandten Unterseite zumindest eine Ausnehmung oder einen Durchbruch zur Bildung der Belagsoberteilausnehmung (60; 160) aufweist.

6. Bauelementsatz nach einem der vorherigen Ansprüche, wobei die Verbindungselemente (30; 130) zumindest teilweise Funktionsverbindungselemente (30; 130) sind und insbesondere chemische, elektrische, elektromagnetische, optische und/oder magnetische Bauelemente umfassen, insbesondere elektrische Versorgungsleitungen und -anschlüsse, elektrische, optische und mechanische Sensoren und Aktuatoren, Signalleitungen und -anschlüsse, Kommunikationsmittel, Bussysteme, Signalgeber und/oder Transpondersysteme.

7. Bauelementsatz nach einem der vorherigen Ansprüche mit einer Vielzahl der Grundmodule (10; 110), wobei jedes der Grundmodule (10; 110) zumindest eine elektrische Signal- und/oder Versorgungsleitung (B; B1-B3, B1'-B3') sowie eine Kontakteinrichtung (118; 194) zur elektrischen Verbindung mit zumindest einem zugeordneten, angrenzendem Grundmodul (10; 110) umfaßt.

8. Bauelementsatz nach Anspruch 6 oder 7, wobei jedes der im wesentlichen plattenförmigen Grundmodule (10; 110) zumindest zwei elektrische Signalund/oder Versorgungsleitungen (B1-B3, B1'-B3') umfaßt, die bevorzugt im wesentlichen parallel zur Plattenebene der Grundmodule (10) verlaufen und sich kreuzen und vorzugsweise zueinander senkrecht angeordnet sind.

9. Bauelementsatz nach einem der Ansprüche 6 bis 8, wobei zumindest eine elektrische Signal- und/oder Versorgungsleitung (B) des Grundmoduls (10; 110) vorzugsweise in einem Kontaktabschnitt (122) endet, der in dessen Modulausnehmung (20; 120) gebildet ist, und ein zugeordnetes Verbindungselement (30; 130) als Funktionsverbindungselement (30; 130) mit einer Signal- und/oder Versorgungsleitung und einer damit verbundenen Verbindungselementkontakteinrichtung (136) derart ausgelegt ist, daß der Kontaktabschnitt (122) mit der Verbindungselementkontakteinrichtung (136) verbindbar ist.

10. Funktionsverbindungselement (30; 130) zur Verwendung in einem Bauelementesatz für die Erstellung eines Bodenbelags mit zumindest einem insbesondere plattenförmigen Grundmodul (10; 110) mit einer Grundmodulunterseite und einer Grundmoduloberseite, wobei die Grundmodulunterseite zum Auslegen eines Bodenbelags auf einem vorbereiteten Bodenunterbau ausgelegt ist und an der gegenüberliegenden, der Begehseite des Bodenbelags zugewandten Grundmoduloberseite zumindest eine Modulausnehmung (20; 120) vorgesehen ist,
wobei das Funktionsverbindungselement (30; 130) in die Modulausnehmung (20; 120) einsetzbar ist, in einen insbesondere plattenförmigen Bodenbelagsoberteil (50; 150) eingreifen kann und chemische, elektrische, elektromagnetische, optische und/oder magnetische Bauelemente umfassen, insbesondere elektrische Versorgungsleitungen und -anschlüsse, elektrische, optische und mechanische Sensoren und Aktuatoren, Signalleitungen und -anschlüsse, Kommunikationsmittel, Bussysteme, Signalgeber und/oder Transpondersysteme aufweist.

## Claims

1. Modular construction kit for assembling a floor covering comprising
- at least one, especially a tile-shaped base module (10; 110) with a base module bottom side and a base module top side, the base module bottom side being designed for a floor covering to be laid on a prepared floor substructure, and at least one module recess (20; 120) being provided on the other side, the base module top side, facing the walking side of the floor covering,
- at least one connecting element (30; 130), which can be inserted into the module recess (20; 120) in such a way that a connecting section (40) of the connecting element (30; 130) projects beyond the base module top side towards the walking surface, and
- at least one, especially a tile-shaped floor covering upper part (50; 150), the top side of which is designed as part of the walking surface and on the bottom side of which facing the base module (10; 110) and the connecting element (30; 130) at least one floor covering upper part recess (60; 160) is provided, in which the connecting section (40) of the associated connecting element (30; 130) engages.

2. Modular construction kit according to Claim 1, **characterized in that** the module and/or floor covering upper part recesses (20, 60; 120, 160) are designed to receive the connecting element (30; 130) in a positive interlock and preferably comprise a catch device for locking the module and/or floor covering upper part recess (20, 60; 120, 160) to the connecting element (30; 130).

3. Modular construction kit according to Claim 1 or 2, **characterized in that** bearing surfaces (72; 172) of the base module top side, which adjoin the module recess (20; 120) come to bear flatly, at least in places, against the associated bearing surfaces (70; 170) of the bottom side of the floor covering upper part (50; 150).

4. Modular construction kit according to any one of the preceding, Claims, **characterized in that** the floor covering upper part (50; 150) comprises an especially tile-shaped design-layer (52) the top side of which is designed as part of the walking surface, and a base layer (54, 154), which is affixed to the bottom side of the design layer (52).

5. Modular construction kit according to Claim 4, **characterized in that** the base layer (54; 154) is, in particular, tile-shaped and on its bottom side remote from the design layer (52) has at least one recess or an opening in order to form the floor covering upper part recess (60; 160).

6. Modular construction kit according to any one of the preceding claims, **characterized in that** at least some of the connecting elements (30; 130) are functional connecting elements (30; 130) and in particular comprise chemical, electrical, electromagnetic, optical and/or magnetic components, in particular electrical supply leads and connections, electrical, optical and mechanical sensors and actuators, signal lines and connections, communications equipment, bus systems, signal generators and/or transponder systems.

7. Modular construction kit according to any one of the preceding claims having a plurality of base modules (10; 110), **characterized in that** each of the base modules (10; 110) comprises at least one electrical signal line and/or supply lead (B; B1-B3, B1'-B3') and a contact device (118; 194) for the electrical connection to at least one associated, adjacent base module (10; 110).

8. Modular construction kit according to Claim 6 or 7, **characterized in that** each of the substantially tile-shaped base modules (10; 110) comprises at least two electrical signal lines and/or supply leads (B1-B3, B1'-B3', which preferably run largely parallel to the tile plane of the base module (10) and cross one another and are preferably arranged perpendicular to one another.

9. Modular construction kit according to any one of Claims 6 to 8, **characterized in that** an electrical signal line and/or supply lead (B) of the base module (10; 110) preferably terminates in a contact section (122), which is formed in the module recess (20; 120) thereof, and an associated connecting element (30; 130) is designed as functional connecting element (30; 130) with a signal line and/or supply lead and with a connecting element contact device (136) connected thereto, in such a way that the contact section (122) can be connected to the connecting element contact device (136).

10. Functional connecting element (30; 130) for use in a modular construction kit for assembling a floor covering comprising at least one, especially a tile-shaped base module (10; 110) with a base module bottom side and a base module top side, the base module bottom side being designed for a floor covering to be laid on a prepared floor substructure and at least one module recess (20; 120) being provided on the other side, the base module top side, facing the walking side of the floor covering, the functional connecting element (30; 130) being insertable into the module recess (20; 120) and capable of engaging in an especially tile-shaped floor covering upper part (50; 150), and having chemical, electrical, electromagnetic, optical and/or magnetic components, in particular electrical supply leads and connections, electrical, optical and mechanical sensors and actuators, signal lines and connections, communications equipment, bus systems, signal generators and/or transponder systems.

## Revendications

1. Ensemble d'éléments de construction pour la mise en place d'un revêtement de sol comprenant
- au moins un module de base (10 ; 110) en particulier en forme de plaque avec un côté inférieur de module de base et un côté supérieur de module de base, le côté inférieur du module de base étant posé sur une sous-structure de sol préparée pour la pose d'un revêtement de sol et au moins un évidement (20 ; 120) de module étant prévu sur le côté supérieur opposé du module de base orienté vers le côté praticable du revêtement de sol,
- au moins un élément de connexion (30 ; 130) qui peut être inséré dans l'évidement (20 ; 120) de module de telle manière qu'une section de connexion (40) de l'élément de connexion (30 ; 130) fasse saillie au-dessus du côté supérieur du module de base en direction de la surface praticable, et
- au moins une partie supérieure (50 ; 150) de revêtement de sol en particulier en forme de plaque dont le côté supérieur est posé comme partie de la surface praticable et dont le côté inférieur orienté vers le module de base (10 ; 110) et vers l'élément de connexion est pourvu d'au moins un évidement (60 ; 160) dans lequel la section de connexion (40) de l'élément de connexion (30 ; 130) associé s'engage.

2. Ensemble d'éléments de construction selon la revendication 1, les évidements (20, 60 ; 120, 160) du module et/ou de la partie supérieure du revêtement étant dimensionnés pour accueillir l'élément de connexion (30 ; 130) par liaison de forme et comprennent de préférence un dispositif de blocage pour bloquer les évidements (20, 60 ; 120, 160) du module et/ou de la partie supérieure du revêtement avec l'élément de connexion (30 ; 130).

3. Ensemble d'éléments de construction selon la revendication 1 ou 2, les surfaces d'appui (72 ; 172) du côté supérieur du module de base, qui sont contiguës à l'évidement (20 ; 120) du module, entrent en contact au moins en partie à plat avec les surfaces d'appui (70 ; 170) du côté inférieur de la partie supérieure (50 ; 150) du revêtement.

4. Ensemble d'éléments de construction selon une des revendications précédentes, la partie supérieure (50 ; 150) du revêtement de sol comprenant une couche design (52) en particulier en forme de plaque dont le côté supérieur est posé comme partie de la surface praticable et une couche de base (54 ; 154) qui est appliquée sur le côté inférieur de la couche design (52).

5. Ensemble d'éléments de construction selon la revendication 4, la couche de base (54 ; 154) étant notamment en forme de plaque et présentant sur son côté inférieur opposé à la couche design (52) au moins un évidement ou un ajour pour former l'évidement (60 ; 160) de la partie supérieure du revêtement.

6. Ensemble d'éléments de construction selon une des revendications précédentes, les éléments de connexion (30 ; 130) étant au moins en partie des éléments de connexion fonctionnels (30 ; 130) et comprenant en particulier des éléments de construction chimiques, électriques, électromagnétiques, optiques et/ou magnétiques, en particulier des conduites et des branchements d'alimentation électrique, des capteurs et des actionneurs électriques, optiques et mécaniques, des conduites et des branchements de signaux, des moyens de communication, des systèmes de bus, des émetteurs de signaux et / ou systèmes de transpondeurs.

7. Ensemble d'éléments de construction selon une des revendications précédentes, chacun des modules de base (10; 110) comprenant au moins une conduite de signaux et/ou d'alimentation électriques (B ; B1 - B3, B1' - B3') ainsi qu'un mécanisme de contact (118 ; 194) pour la connexion électrique avec au moins un module de base (10 ; 110) contigu associé.

8. Ensemble d'éléments de construction selon la revendication 6 ou 7, chacun des modules de base (10; 110) essentiellement en forme de plaque comprenant au moins deux conduites de signaux et/ou d'alimentation électriques (B1 - B3, B1' - B3') qui s'étendent essentiellement en parallèle avec le plan de plaque des modules de base (10) et se croisent et sont disposées de préférence perpendiculairement l'une par rapport à l'autre.

9. Ensemble d'éléments de construction selon les revendications 6 à 8, au moins une conduite de signaux et / ou d'alimentation électriques (B) du module de base (10 ; 110) se terminant de préférence en une section de contact (122) qui est formée dans son évidement (20 ; 120) de module, et un élément de connexion (30 ; 130) associé servant élément de connexion fonctionnel (30 ; 130) avec une conduite de signaux et/ou d'alimentation et avec un mécanisme de contact (136) d'élément de connexion connecté avec celle-ci étant dimensionné de telle manière que la section de contact (122) puisse être connectée avec le mécanisme de contact (136) de l'élément de connexion..

10. Élément de connexion fonctionnel (30 ; 130) à utiliser dans un ensemble d'éléments de construction pour la mise en place d'un revêtement de sol comprenant au moins un module de base (10 ; 110) en particulier en forme de plaque avec un côté inférieur de module de base et un côté supérieur de module de base, le côté inférieur du module de base étant posé sur une substructure de sol préparée pour la pose d'un revêtement de sol et au moins un évidement (20 ; 120) de module étant prévu sur le côté supérieur opposé du module de base orienté vers le côté praticable du revêtement de sol,
l'élément de connexion fonctionnel (30 ; 130) pouvant être inséré dans l'évidement (20 ; 120) du module, pouvant s'engager dans une partie supérieure (50 ; 150) du revêtement de sol en particulier en forme de plaque et comprenant des éléments de construction chimiques, électriques, électromagnétiques, optiques et/ou magnétiques, en particulier des conduites et des branchements d'alimentation électrique, des capteurs et des actionneurs électriques, optiques et mécaniques, des conduites et des branchements de signaux, des moyens de communication, des systèmes de bus, des émetteurs de signaux et / ou systèmes de transpondeurs.
